# EUROPEAN PATENT SPECIFICATION

(11) **EP 4 513 291 B1**
(45) Date of publication and mention of the grant of the patent: **11.02.2026**
(21) Application number: 23306401.3
(22) Date of filing: 21.08.2023
(51) Int. Cl.: G05D 1/223, G05D 1/224, G06F 3/04845, G06F 3/04883

(54) **UNMANNED ASSET CONTROL SYSTEM**
SYSTEM ZUR STEUERUNG VON UNBEMANNTEN FAHRZEUGEN
SYSTÈME DE COMMANDE D'ACTIFS SANS PILOTE

(43) Date of publication of application: 26.02.2025
(73) Proprietor: Rockwell Collins France S.A.S., 31701 Blagnac (FR)
(72) Inventor: THOMAS, Eric, 32600 Pujaudran (FR); BITAR, Elias, 31170 Tournefeuille (FR)
(74) Representative: Dehns

(56) References cited:
- WO-A1-2022/209398
- US-A1- 2010 286 859
- US-A1- 2017 061 803
- US-A1- 2021 397 202
- US-B2- 10 996 666

## Description

### FIELD

This disclosure relates to systems and methods for controlling operation of one or more unmanned assets.

### BACKGROUND

At present, unmanned assets, in particular unmanned aerial vehicles (UAVs), are commanded via the input of a specifically designated journey, or journey plan. This requires an unmanned asset commander to calculate a journey plan for each unmanned asset and manually instruct this plan. In the case of UAVs, the journey plan is a flight plan and the calculated flight plan must contain specific instructions, e.g. take off and climb to altitude X, follow heading Y for Z km, then turn onto heading A, etc. This is a very involved task for the commander.

Many modern operations are performed using a combination of manned and unmanned assets, and as such, it is advantageous for the crew of manned assets to be able to allocate tasks to unmanned teammates. Current systems require too much detailed input from commanders to be operated effectively by crew who must also focus on the operation of their own manned asset (e.g. a pilot must focus on flying his own aircraft and does not have the time to plot out and instruct detailed flight plans for each of his unmanned teammates). As such, a more efficient system for controlling unmanned assets, in particular UAVs, is needed.

US2010286859A1 discloses methods for generating a flight plan for an aerial vehicle equipped with a surveillance module by using a control unit having a display device. The method comprises graphically identifying, on a map displayed on the display device, a desired target for the surveillance module. A flight plan is generated based on the desired target such that a predicted camera path for the surveillance module overlaps the desired target.

US2017061803A1 discloses a wireless aircraft which is used to determine the flight route and the altitude by specifying an imaging area too large to be imaged in a single shot on the map.

US10996666B2 discloses an unmanned aerial vehicle control method and apparatus. A device displays a map. The device detects a first movement path on a touch-sensitive surface of the device. The device overlays a trajectory on the map in accordance with the first movement path. The device automatically generates a number of waypoints along the trajectory and the device displays the waypoints on the trajectory and sends instructions to an unmanned vehicle in accordance with the trajectory and the waypoints. The unmanned vehicle moves in accordance with trajectory by executing the instructions.

### SUMMARY

According to this disclosure, there is provided a system for controlling operation of one or more unmanned assets, as defined in claim 1.

According to this disclosure, there is also provided a method for controlling operation of one or more unmanned assets, as defined in claim 15.

It will be understood that the tasks and/or commands are what the commander has instructed via their graphical inputs (e.g. take off from this location, deliver payload to this location, patrol/scan this area), however, the tasks and/or commands are in the form of an unordered list, and may not be allocated to any specific unmanned asset.

It will be understood that the operation instructions are (e.g. high-level) instructions which are specific to an individual unmanned asset (e.g. unmanned asset x is to take off from this location, then patrol this area, then deliver payload at this location etc). In examples, they result from the sequencing and allocation of the tasks and/or commands (e.g. unordered and unallocated list of tasks and/or commands) discussed above to the one or more unmanned assets. It will therefore be understood that, in examples, where the operation of a plurality of assets is being controlled, separate operation instructions will be generated for each of the plurality of assets.

It will further be understood that the journey plan is a more detailed plan (e.g. take off from this location, climb to altitude x, follow heading Y for Z km to reach the area to be patrolled, patrol the area at an altitude X whilst flying in a zig-zag pattern for T minutes, etc.) which is specific to an individual unmanned asset and is generated to be executed by each individually designated unmanned asset. It will therefore be understood that where the operation of a plurality of assets is being controlled, a separate journey plan will be generated for each of the plurality of assets.

As such, the method may comprise (and the operation planning module may be configured to) generating operation instructions for each of the one or more unmanned assets based at least on the tasks and/or commands.

As such, the method may comprise (and the journey planning module may be configured to) generating a journey plan for each of the one or more unmanned assets based at least on the operation instructions. Thus, the method may comprise (and the communications module may be configured to) communicating with the one or more unmanned assets to instruct the unmanned assets to operate according to the respective generated journey plans (i.e. the journey plan for each unmanned asset).

This journey plan may result from the refinement of the sequence of the operation instructions. The generation of the journey plan may also comprise translating the operation instructions into a format which the unmanned assets understand.

In examples, where not all of a plurality of assets are assigned tasks, the one or more assets which have not been assigned tasks may not have a journey plan communicated to them. Alternatively, the assets may have a journey plan communicated to them which instructs the assets to do nothing, or to hold position.

The communication between the communications module and the one or more unmanned assets may occur via a communications module on board each of the one or more unmanned assets.

In examples, the communications module is configured to communicate with the one or more unmanned assets to monitor the execution of the unmanned asset's instructed journey plan.

In some examples, the operation planning module is further configured to obtain data indicative of external and/or environmental constraints, and to generate operation instructions based on the data indicative of external and/or environmental constraints.

In some examples, the data indicative of external and/or environmental constraints comprises data indicative of one or more of: terrain information (e.g. elevation, gradient, surface type), weather, obstacles, air traffic, restricted and hazardous areas, published navigation information (e.g. routes, corridors, aerodromes, etc.).

In some examples, the graphical user interface is configured to accept hand-drawn inputs. In some examples, the graphical user interface comprises a touchscreen. In some examples, the graphical user interface may comprise a different device, for example, a projector, a hologram, cameras, a drawing tablet, a gesture recognition device, a non-touchscreen device requiring inputs using a conventional mouse.

In some examples, the system and method are for controlling operation of one or more unmanned assets including one or more unmanned aerial vehicles (UAVs). In some examples, the system and method are for controlling operation of one or more UAVs.

In some examples, the system and method are for controlling operation of a plurality of unmanned assets comprising a plurality of different unmanned asset types, e.g. unmanned aerial vehicles (UAVs), unmanned ground vehicles (UGVs), unmanned surface vehicles (USVs) for operation on the surface of water, unmanned underwater vehicles (UUVs).

In some examples, recognising the graphical inputs comprises (and the input interpretation module is configured to (recognise the graphical inputs by)) identifying the shapes of the graphical inputs, and further identifying geographical locations corresponding to the portions of the map on which the graphical inputs were drawn.

In some examples, the input interpretation module comprises a (e.g. local) memory, wherein the library of known input symbols and corresponding commands is stored in the (e.g. local) memory.

In some examples, the library of known input symbols and corresponding commands is stored in a remote memory. In some examples, translating the graphical inputs comprises (and the input interpretation module is configured to) obtaining the library of known input symbols and corresponding commands from the (e.g. remote) memory.

In some examples, the method comprises (and the input interpretation module is configured to) producing an error output if the graphical input does not match any of the known input symbols.

In some examples, the method comprises (and the graphical user interface is configured to) providing an indication of the error to the user (e.g. via a message on a screen, or, in examples where the graphical user interface comprises an audio function, via an audible error message sound).

In some examples, the method comprises (and the operation planning module is configured to) receiving (e.g. via the communication module) position and/or status data relating to the one or more unmanned assets.

In examples, the unmanned asset status data may comprise one or more of availability, health status, charge/fuel level, and/or payload status relating to the one or more unmanned assets.

In some examples, the method comprises (and the operation planning module is configured to) receiving (e.g. via the communication module) position and status data from each unmanned asset (e.g. from a communication module of each unmanned asset).

In some examples, the method comprises (and the operation planning module is configured to) receiving (e.g. via the communication module) position and status data from an unmanned asset tracking database which contains the current position and status of one or more (e.g. all) unmanned assets in a fleet. The information in the unmanned asset tracking database may come from the unmanned assets themselves, or the position of unmanned assets may be determined using a system external from the unmanned assets, e.g. a GPS or RADAR tracking system. In another example, the information in the unmanned asset tracking database may come from logs. For example, it may be determined, from a usage log, that a fleet of unmanned assets are currently available for use and being stored at a base or in a hangar.

In some examples, the method comprises (and the operation planning module is configured to) allocating tasks associated with graphical inputs to different ones of a plurality of unmanned assets. In some examples, where the plurality of assets comprises a plurality of different asset types, the method may comprise (and the operation planning module may be configured to) obtaining data indicative of the capabilities of each asset, and allocating tasks based at least partially on the data indicative of the capabilities of each asset.

In some examples, the allocation of tasks is based at least partially on the position and/or status data.

In some examples, a single graphical input may be applicable to a plurality (e.g. the entire fleet or a cluster or group) of unmanned assets. As such, in some examples, the method comprises (and the operation planning module is configured to) allocating a single task or command to a plurality (e.g. the entire fleet or a cluster or group) of unmanned assets.

In some examples, the graphical inputs correspond to commands including one or more of: take off from this location, land in this location, ditch in this location in case of emergency, rendezvous at this location at this time, deliver payload to this location, pick up payload from this location, inspect (one time) this portion of highway/border/railway/powerline, patrol (several times) this portion of highway/border/railway/powerline from this location, inspect (one time) this portion of highway/border/railway/powerline, patrol/scan this area, avoid flying over this area, loiter in this location, monitor this point of interest in orbit, monitor this point of interest in a figure of eight, search this area for targets, search along this border for targets, gather at this location, split from this location.

According to this disclosure, there is also provided a system comprising one or more unmanned assets; and a system for controlling operation of the one or more unmanned assets as described herein.

In some examples, the one or more unmanned assets comprise a communications module configured to communicate with the communications module of the system for controlling operation of the one or more unmanned assets.

In some examples, the one or more unmanned assets include one or more unmanned aerial vehicles (UAVs).

In some examples, the system comprises a plurality of unmanned assets comprising a plurality of different unmanned asset types, e.g. unmanned aerial vehicles (UAVs), unmanned ground vehicles (UGVs), unmanned surface vehicles (USVs) for operation on the surface of water, unmanned underwater vehicles (UUVs).

In some examples, the one or more unmanned assets are configured to send position and/or status data (e.g. via a communication module of each unmanned assert) relating to the one or more unmanned assets to the system for controlling operation of the one or more unmanned assets.

In examples, the unmanned asset status data may comprise one or more of availability, health status, charge/fuel level, and/or payload status.

In some examples, the one or more unmanned assets are configured to send data indicative of their capabilities (e.g. land capabilities, aquatic capabilities, aerial capabilities, payload capabilities, monitoring capabilities, etc.).

### BRIEF DESCRIPTION OF DRAWINGS

One or more non-limiting examples will now be described, by way of example only, and with reference to the accompanying figures in which:
Figure 1 is a schematic block diagram showing a system 1 for controlling one or more unmanned assets;
Figure 2 is a flowchart illustrating a method for controlling one or more unmanned assets;
Figures 3a-d, 4a-d, 5a-b, 6a-d, 7a-c, and 8a-b illustrate a plurality of symbols which may be accepted as graphical inputs;
Figure 9 illustrates a graphical user interface on which a set of graphical inputs have been drawn;
Figures 10a and 10b illustrate a plurality of symbols which may be accepted as graphical inputs; and
Figure 11 illustrates a graphical user interface on which a further set of graphical inputs have been drawn.

The below described examples will be understood to be exemplary only. It will be understood that where used herein, terms such as up and down refer to directions as viewed in the reference frame of the appended Figures.

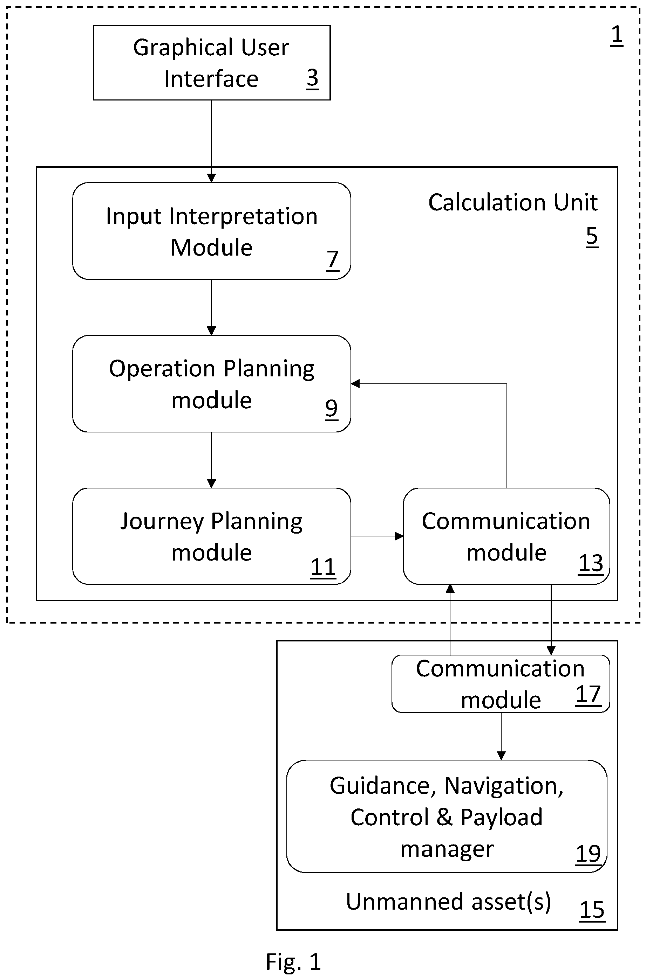

Figure 1 is a schematic block diagram showing a system 1 for controlling the operation of one or more unmanned assets 15. The system includes a graphical user interface 3 which, in the illustrated example, is a touchscreen. The system further includes a calculation unit 5 which comprises an input interpretation module 7, an operation planning module 9, a journey planning module 11, and a communication module 13.

In Figure 1, the system 1 is shown in communication with one or more unmanned asset(s) 15. The unmanned asset(s) each comprises a communication module 17, and a guidance, navigation, control and payload manager 19.

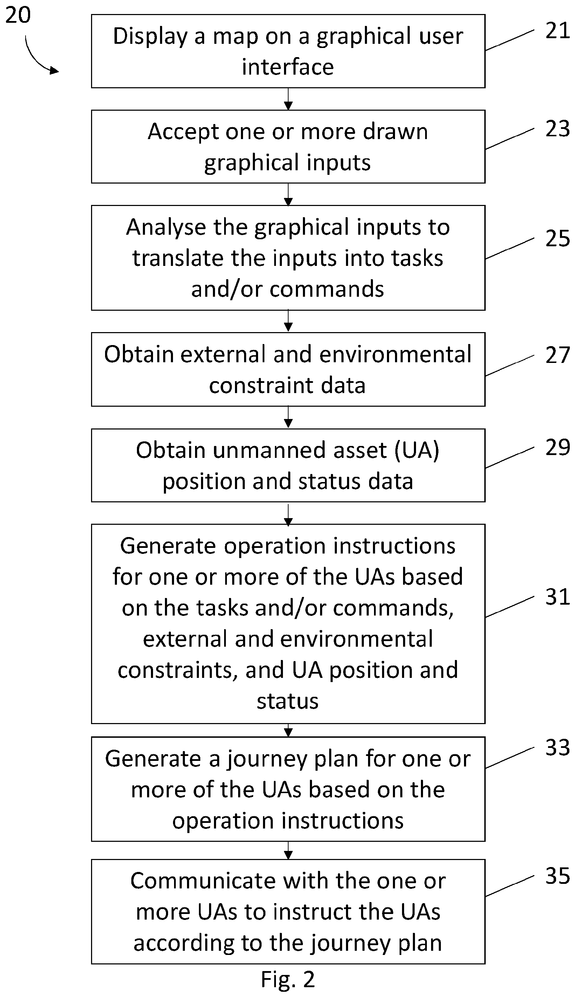

Operation of the system 1 will now be explained with reference to the flowchart of Figure 2.

Figure 2 shows a flowchart illustrating the method 20 which is performed by the system 1 of Figure 1. At step 21, an illustration of a map is displayed on a graphical user interface 3. The displayed map corresponds to a geographical area in which the one or more unmanned assets 15 will be conducting a mission. The area to be displayed on the graphical user interface 3 may be selected by a commander as a pre-condition of the method 20. Alternatively, the graphical user interface 3 may display a map centred around the commander's current location or centred around the current location of an unmanned asset or cluster of unmanned assets 15.

At step 23, the graphical user interface 3 accepts one or more illustrated inputs from the commander. In the illustrated example, the graphical user interface 3 is a touchscreen and so the commander provides their graphical inputs by drawing on the touchscreen with a finger or a stylus. In some examples, step 23 may also comprise accepting a further input from the commander confirming that they have finished providing graphical inputs, and the system 1 should proceed to analysing the graphical inputs.

At step 25, the input interpretation module 7 analyses the graphical inputs, and translates the graphical inputs into tasks and/or commands. This analysis comprises three steps:
a) recognise the shape which has been drawn;
b) determine the location or locations which correspond to the position on the map at which the graphical input has been drawn;
c) compare the recognised shape to a library of known shapes and, if the shape matches a known shape, output the task and/or command which is associated with that shape to be performed at the location or locations which were determined at step (b).

It will be understood that, in examples, the order of steps (b) and (c) may be reversed.

In examples, the input interpretation module 7 may be configured to output an error message, for example to be displayed to a commander (e.g. using the graphical user interface) if at step (a) the shape is not recognised, or at step (c) the recognised shape does not match a known shape.

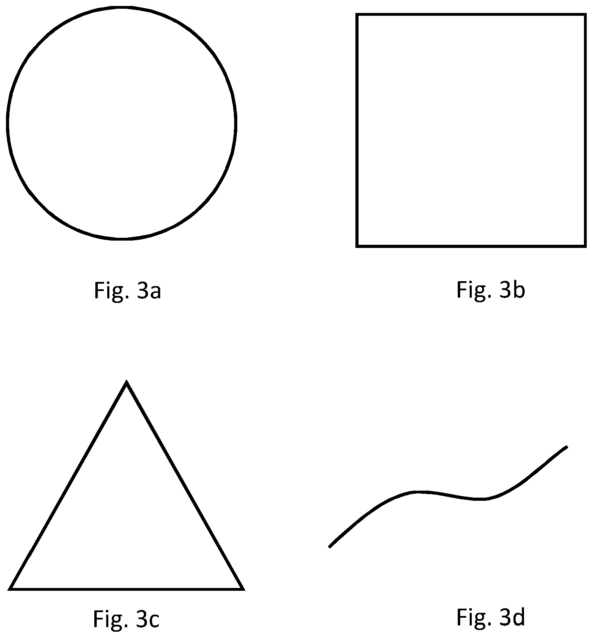

The shape recognition from step (a) can use any known shape recognition tool, for example, Adobe's^{®} shaper tool. Example shapes, and their associated tasks and/or commands, are discussed below in relation to Figures 3a - 8b, 10a and 10b.

It will be understood that the recognition step (a) comprises recognising the shape which has been drawn, without yet processing its significance, e.g. recognising that the commander has drawn a circle with a cross through it. It is at step (c) that the significance of this shape is determined. There may be scenarios where a shape is recognised at step (a) by the shape recognition tool, but the shape does not correspond to a known shape which has an associated task or command. For example, if the commander drew an octagon, the shape recognition tool may recognise (at step (a)) that an octagon had been drawn, but at step (c) no task and/or command is found which is associated with an octagon, and so an error message may be output at step (c).

The tasks and/or commands are then forwarded by the input interpretation module 7 to the operation planning module 9.

At step 27, external and environmental constraint data is obtained by the operation planning module 9. This data may comprise a plurality of different data types which may be relevant. In some examples, the external and environmental constraint data comprises terrain elevation data, weather data, obstacle data, and air traffic data. This data can be obtained in any suitable and desired way, for example via a ground network and/or via wireless communications. In some examples, the terrain elevation data may be stored in local memory.

At step 29, unmanned asset position and status data is obtained. The communication module 17 of each unmanned asset is configured to send position and status data to the communication module 13 of the control system 1. This data is then forwarded by the system's communication module 13 to the operation planning module 9. The unmanned asset status data may comprise details such as availability, health status, charge/fuel level, payload status, etc.

Obtaining unmanned asset position and status data may be performed by means other than the communication module 17 of each asset. For example, the system may be configured to interface with an unmanned asset tracking database which contains the current position and status of all unmanned assets in a fleet. The information in the unmanned asset tracking database may come from the unmanned assets themselves, or the position of unmanned assets may be determined using a system external from the unmanned assets, e.g. a GPS or RADAR tracking system. In another example, the information in the unmanned asset tracking database may come from logs. For example, it may be determined, from a usage log, that a fleet of unmanned assets are currently available for use and being stored at a base or in a hangar.

At step 31, the operation planning module 9 generates operation instructions based on the tasks and/or commands, the external and environmental constraint data, and the unmanned asset position and status data. The operation instructions may be considered macro-operations which outline a mission strategy, and a sequence of operations to be performed by the one or more unmanned assets 15. The operation planning module is configured to sequence and allocate (e.g. optimally sequence and allocate) the tasks and/or commands to the one or more unmanned assets. As such it may not be necessary for the commander to sketch the mission in the exact order the operations will be executed. The commander may start from the main objective (e.g. "search that area"), and then define where to take-off from, where to land, no-fly zones, emergency landing zones, etc. As such, once step 31 is complete, a set of operation instructions has been generated for each of the unmanned assets which has been allocated any tasks and/or commands

At step 33, the operation instructions are passed to the journey planning module 11. The journey planning module 11 uses the macro-operations outlined by the operation instructions to generate specific journey plans for one or more of the individual unmanned assets 15. These journey plans include all sufficient detail for a commander to carry out its assigned mission, e.g. take off location, exact route, altitude and groundspeed instructions, and payload commands.

At step 35, the communication module 13 sends the respective journey plans to the one or more unmanned assets 15 via the communications modules 17 of the unmanned assets 15. The guidance, navigation, control, and payload manager 19 of the or each unmanned asset 15 can then operate the unmanned asset 15 to follow the assigned journey plan.

The method 20 will now be explained in relation to an example.

At step 21, a map is displayed on a graphical user interface, and at step 23, the unmanned asset commander draws graphical inputs corresponding to tasks. At step 25, the inputs are analysed, and translated into a list of tasks and commands:
- patrol this area
- deliver a payload at this location,
- take off from this location
- land at this location.

At step 27 and 29 external and environmental constraint data, and unmanned asset position and status data are obtained.

At step 31, operation instructions are generated based on the list of tasks and commands, the external and environmental constraint data, and the unmanned asset position and status data. The operation instructions are specific to each unmanned asset and result from the sequencing and allocation of the tasks and/or commands. In this example, the unmanned asset position and status data indicates that there are two unmanned assets, A and B available at the instructed take-off location, and that unmanned asset A has surveillance capabilities and unmanned asset B has payload capabilities. As such, the operation instructions are as follows:
Asset A operation instructions:
   1. take off from the specified location
   2. patrol the specified area
   3. land at the specified landing location
Asset B operation instructions:
   1. take off from the specified location
   2. deliver the payload at the specified delivery location
   3. land at the specified landing location

At step 33, a journey plan is generated for unmanned asset A and unmanned asset B, based on their respective operation instructions. The journey plan contains detailed instructions for the journey in a format which the assets understand. As such, the journey plan instructions are as follows:
Asset A journey plan:
   1. take off from the specified location
   2. climb to an altitude of 500m
   3. fly on heading 40 degrees for 10 km
   4. fly in a zig-zag pattern over these coordinates at an altitude of 500m for 30 minutes
   5. fly on heading 160 degrees for 15 km
   6. land at the specified landing location
Asset B journey plan:
   1. take off from the specified location
   2. climb to an altitude of 300m
   3. fly on heading 160 degrees for 15 km
   4. descend to an altitude of 100m and drop the payload at these coordinates
   5. fly on heading 400 degrees for 10 km
   6. land at the specified landing location

At step 35, assets A and B are sent their journey plans.

Figures 3a to 8b, and 10a and 10b illustrate a graphical vocabulary which may be used by the system 1 of the illustrated example. It will be understood that the vocabulary described herein is purely exemplary, and that any suitable vocabulary could be defined.

Figures 3a-d illustrate symbols which are used for different operations categories. Figure 3a is a circle, which is used for instructing journey operations, Figure 3b is a square, which is used for instructing payload/cargo operations, Figure 3c is a triangle, which is used for interruptible operations, and Figure 3d shows a line, which is used for instructing zone-based operations.

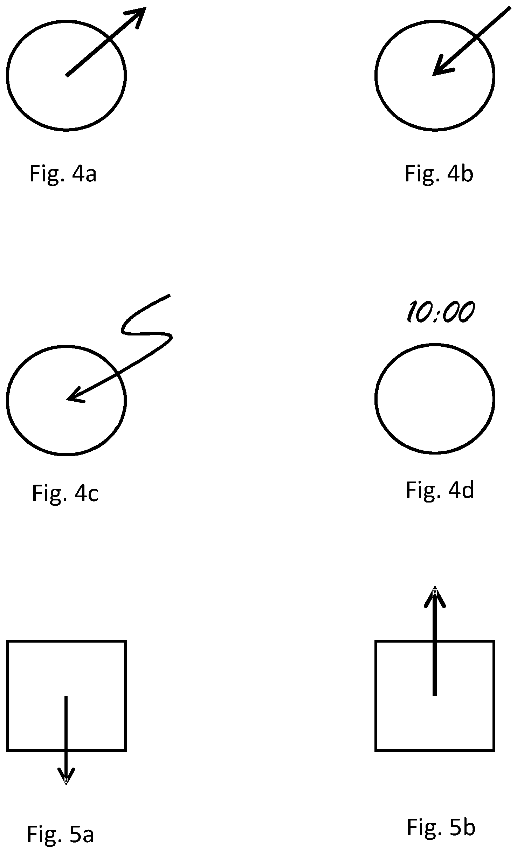

Figures 4a-d illustrate symbols which are used for instructing various journey operations. As explained in relation to Figure 3a, and as can be seen from Figures 4a-d, each of the symbols are based on a circle.

Figure 4a shows a circle with a straight arrow originating from the centre of the circle and pointing diagonally upwards, out of the circle. This symbol is used when the commander wishes to instruct an unmanned asset to take off from the position which is circled on the map.

Figure 4b shows a circle with a straight arrow originating from outside the circle and pointing diagonally downwards, to the centre of the circle. This symbol is used when the commander wishes to instruct an unmanned asset to land at the position which is circled on the map.

Figure 4c shows a circle with a zig-zag arrow originating from outside the circle and pointing to the centre of the circle. This symbol is used when the commander wishes to instruct an unmanned asset to land (e.g. emergency land or ditch) at the position which is circled on the map in the case of an emergency.

Figure 4d shows a circle with a time written next to it. This symbol is used when the commander wishes to instruct an unmanned asset to rendezvous at the position which is circled on the map at the written time.

Figures 5a and 5b show two symbols which are used to instruct payload/cargo operations. As explained above in relation to Figure 3b, both of these symbols are based on squares. Figure 5a shows a square with a straight arrow originating from the centre of the square and pointing downwards out of the square. This symbol is used to instruct an unmanned asset 15 to deposit its payload/cargo at the location on the map which is covered by the square. Figure 5b shows a square with a straight arrow originating from the centre of the square and pointing upwards out of the square. This symbol is used to instruct an unmanned asset 15 to collect its payload/cargo from the location on the map which is covered by the square.

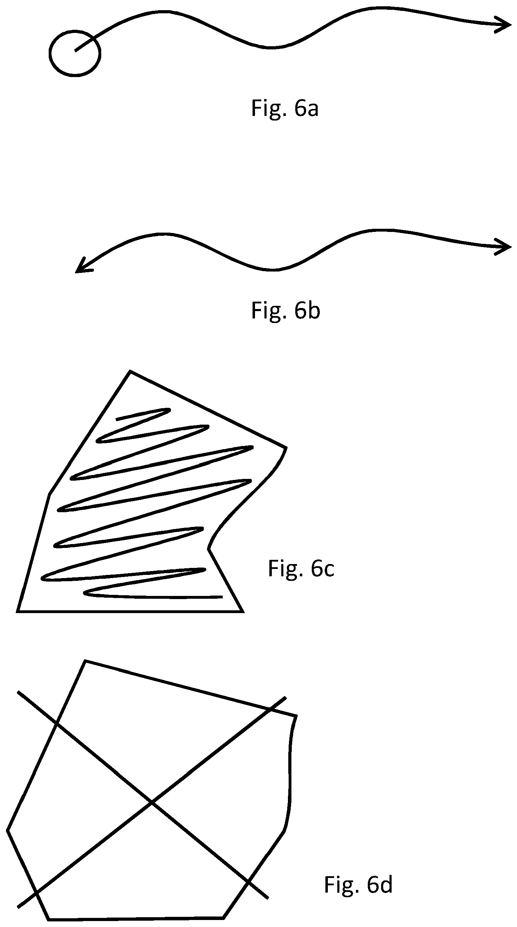

Figure 6a shows a symbol which comprises a line having a circle at one end, and an arrowhead at the opposite end. This symbol is used to instruct an unmanned asset 15 to inspect the feature covered by the line once, travelling in the direction of the arrowhead. This symbol may be drawn for example over a section of highway, border, railway line, powerline. Figure 6b shows a similar symbol, but rather than having a circle at one end, the line has arrowheads at both ends. This symbol is used to instruct the unmanned asset 15 to patrol the feature covered by the line (e.g. inspect several times).

Figure 6c shows a representation which is used to instruct an unmanned asset 15 to patrol an area. The specific shape shown in Figure 6c is purely exemplary. To instruct an unmanned asset to patrol an area, the commander draws an enclosed shape (e.g. polygon) around that area, and then draws a zig-zag line inside that shape.

Figure 6d shows a representation which is used to instruct an unmanned asset 15 to avoid an area (e.g. avoid flying over an area). As with Figure 6c, the specific shape shown in Figure 6d is purely exemplary. To instruct an unmanned asset 15 to avoid an area, the commander draws an enclosed shape (e.g. polygon) around that area, and then draws a cross through that shape.

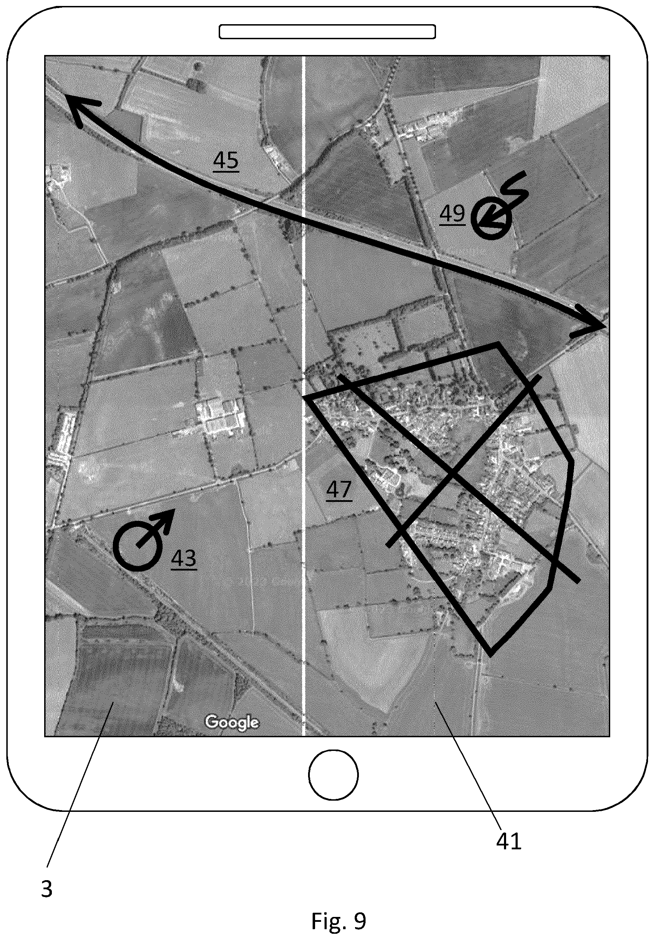

Use of the drawings shown in Figures 6a-d may be better understood with reference to Figure 9 which is discussed below.

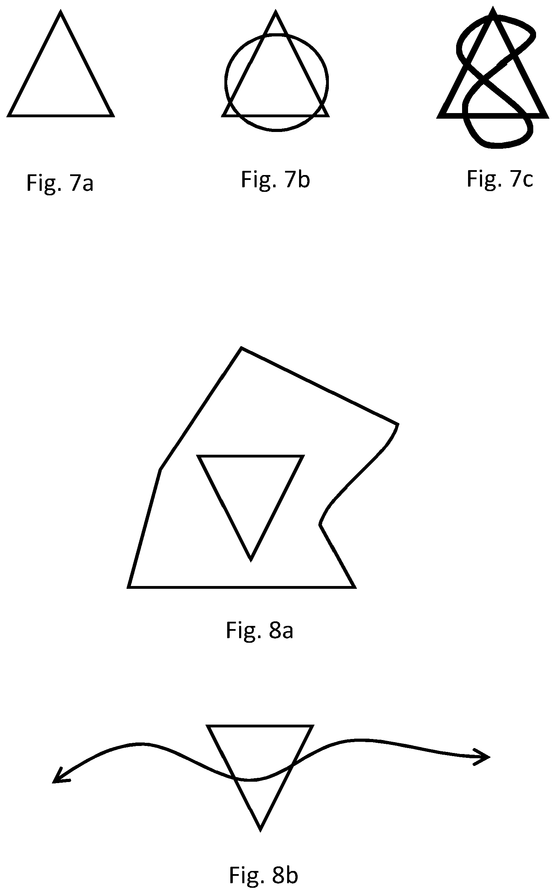

Figures 7a-c and Figures 8a-b show symbols which are used to instruct interruptible operations. As explained above in relation to Figure 3c, each of these symbols involves a triangle. In the illustrated example, there are two classifications of interruptible operations, those interruptible by the commander, and those interruptible by the unmanned asset 15.

An operation may be interrupted by an unmanned asset 15 for example in a search and rescue mission where the instruction is to scan a certain area until the missing person is located. Upon locating the person, the unmanned asset 15 would then interrupt its own scanning operation. In the defined vocabulary, commander interruptible operations are denoted by an upwardly pointing triangle whilst unmanned asset 15 interruptible operations are denoted by a downwardly pointing triangle.

The symbol shown in Figure 7a is a simple upwardly pointing triangle. This symbol is used to instruct an unmanned asset 15 to loiter/hover at the position at which the triangle is drawn on the map. Since this is an upwardly pointing triangle, the instruction is to loiter/hover until interrupted by the commander.

The symbol shown in Figure 7b is an upwardly pointing triangle with a circle overlaid. This symbol is used to instruct an unmanned asset 15 to monitor a point of interest at the position at which the symbol is drawn on the map whilst flying in orbit around the point of interest. Since this is an upwardly pointing triangle, the instruction is to monitor the point of interest in orbit until interrupted by the commander.

The symbol shown in Figure 7c is an upwardly pointing triangle with a figure of eight overlaid. This symbol is used to instruct an unmanned asset 15 to monitor a point of interest at the position at which the symbol is drawn on the map whilst flying in a figure of eight around the point of interest. Since this is an upwardly pointing triangle, the instruction is to monitor the point of interest in a figure of eight until interrupted by the commander.

It will be understood that for operations to be interrupted by the commander, the system may provide functionality for the commander to provide dynamic instructions such that the calculation unit 5 can make alterations to the journey plan of an unmanned asset 15 even after the asset has been deployed.

Figure 8a shows a modification of the representation shown in Figure 6c. The representation shown in Figure 8a is a polygon which is drawn over an area of the map, and a downwardly pointing triangle is drawn inside this area. This is used to instruct an unmanned asset 15 to search an area (e.g. for a lost person) continually, but for the unmanned asset 15 to interrupt that operation, for example if the lost person is found by the unmanned asset 15.

Figure 8b shows a modification of the representation of Figure 6b. The representation shown in Figure 8b is the double ended arrow from Figure 6b which is used to instruct the scanning/patrolling of the feature covered by the line, but in Figure 8b, a downwardly pointing triangle is drawn over the line. As discussed above in relation to Figure 8a, this is used to instruct the unmanned asset 15 to search the feature (e.g. for an intrusion) continually, but for the unmanned asset 15 to interrupt that operation, for example if the lost person is found by the unmanned asset 15.

Figure 9 illustrates an example of a set of graphical inputs provided on a map 41 displayed on a graphical user interface 3. Input 43 corresponds to the symbol of Figure 4a, and is an instruction for the unmanned asset 15 to take off from the location where input 43 is drawn. Input 45 corresponds to the symbol of Figure 6b and is an instruction for the unmanned asset 15 to patrol the portion of highway over which the line of input 45 is drawn. Input 47 corresponds to the representation of Figure 6d, and is an instruction for the unmanned asset 15 to avoid flying over the area which is covered by the drawn polygon.

It can be seen from Figure 9, that in the present case, the unmanned asset 15 is being instructed not to fly over the built-up area. Input 49 corresponds to the symbol of Figure 4c, and is an instruction for the unmanned asset 15 to ditch in the location where input 49 is drawn in the case of an emergency.

In the example of Figure 9, the unmanned asset 15 is being instructed to continuously patrol the section of highway, and no explicit landing instruction has been given. Therefore, in the illustrated scenario, the journey plan generated by the calculation unit will be to take off from the location of input 43, proceed to the section of highway covered by input 45 (whilst avoiding the area covered by input 47), continuously scan the section of highway until the unmanned asset 15 runs out of charge/fuel, and then ditch in the location of input 49.

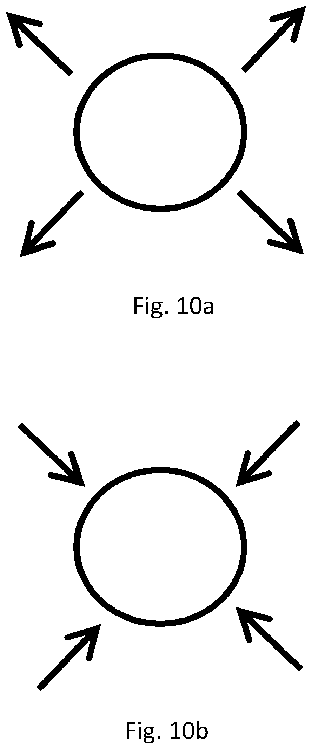

The example of Figure 9 illustrates a set of graphical inputs that can be performed by a single unmanned asset 15. However, the vocabulary of graphical inputs may also contain symbols which correspond to instructions which apply simultaneously to a plurality of unmanned assets 15. Two such symbols are illustrated by Figures 10a and 10b.

The symbol of Figure 10a comprises a circle with four arrows which are equally spaced around the circle and point away from it. This symbol is used as an instruction to a cluster of unmanned assets 15 and is used to instruct the cluster of unmanned assets 15 to split up at the position on the map at which the symbol is drawn. The symbol of Figure 10b comprises a circle with four arrows which are equally spaced around the circle and point towards the circle. This symbol is used to instruct the cluster of unmanned assets 15 to re-group at the position on the map at which the symbol is drawn.

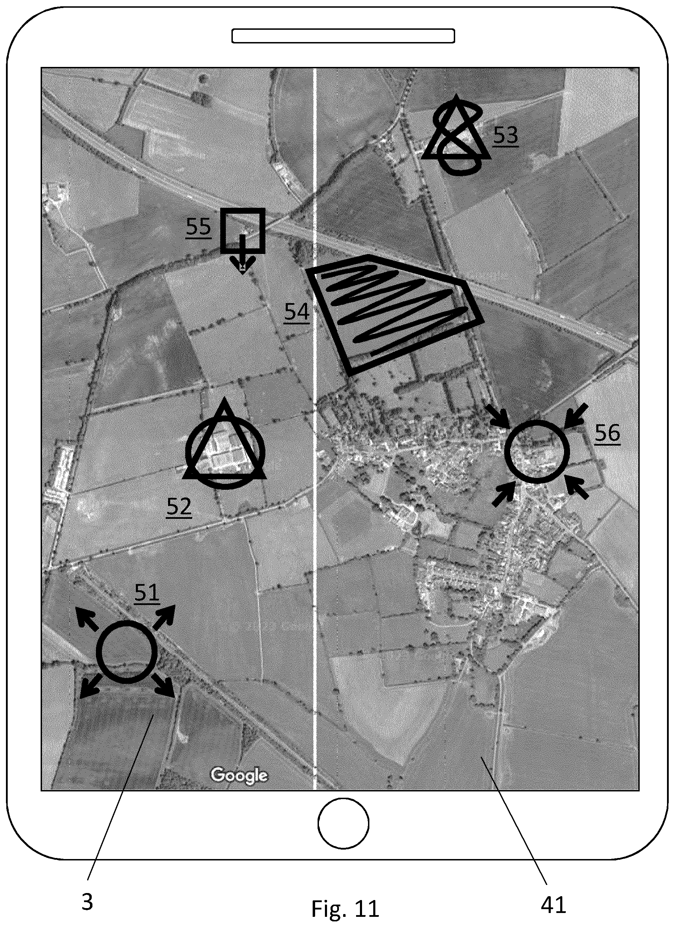

Figure 11 illustrates a further example set of graphical inputs provided on a map 41 displayed on a graphical user interface 3. The graphical inputs provided in Figure 11 represent instructions for a cluster of unmanned assets 15.

Input 51 corresponds to the symbol of Figure 10a, and is an instruction for the cluster of unmanned assets 15 to split up at the position on the map at which input 51 is drawn. Input 52 corresponds to the symbol of Figure 7b and is an instruction for any unmanned asset 15 to monitor the point of interest at the location where input 52 has been drawn whilst flying in an orbit around the point of interest until interrupted by the commander. Input 53 corresponds to the symbol of Figure 7c and is an instruction for any unmanned asset 15 to monitor the point of interest at the location where input 52 has been drawn whilst flying in a figure of eight around the point of interest until interrupted by the commander. Input 54 corresponds to the representation of Figure 6c and is an instruction for any unmanned asset 15 to patrol the area covered by the zig-zag filled shape. Input 55 corresponds to the symbol of Figure 5a and is an instruction for a delivery unmanned asset 15 to deliver its payload at the location where input 55 is drawn. Input 56 corresponds to the symbol of Figure 10b, and is an instruction to each of the unmanned assets 15 to re-group at the location where input 56 is drawn after they have completed their other operations.

In the case of the unmanned assets 15 assigned to perform the interruptible operations associated with inputs 52 and 53 they will continue to monitor the points of interest until the commander interrupts them, at which point they will move to the rendezvous point at the location of input 56. Meanwhile, the unmanned asset 15 assigned to deliver the payload at the location of input 55 will drop its payload, and then proceed directly to the rendezvous point. Likewise, the unmanned asset 15 assigned to perform the patrol according to input 54 will do so, and then proceed to the rendezvous point. Depending on the unmanned asset 15 position and status data, the calculation unit may determine that the same unmanned asset 15 should perform the tasks associated with inputs 55 and 54 since, as can be seen from Figure 11, the unmanned asset 15 could deliver the payload, and then perform the patrol on its way to the rendezvous point.

Whilst the above described examples are primarily concerned with unmanned aerial vehicles (UAVs), the unmanned assets 15 being controlled could comprise any unmanned assets 15, e.g. unmanned ground vehicles (UGVs), unmanned surface vehicles (USVs) for operation on the surface of water, and unmanned underwater vehicles (UUVs). Further, the disclosed systems and methods could be applied to fleets of unmanned assets 15 comprising a plurality of different types of unmanned assets 15.

By way of example, in the example situation presented by Figure 11, although the flying operations associated with inputs 52, 53, and 54 require a commander, the payload delivery instructed by input 55 could be performed by a UGV, and so a calculation unit 5 may simultaneously generate journey plans for a plurality of different unmanned asset types based on the same set of graphical inputs.

It will be understood that although the above examples are mainly focussed around the case of UAVs, the present disclosure is applicable to the control of many types of unmanned assets.

It will be seen that the system of the present disclosure has the potential to simplify the level of detail which needs to be input by an unmanned asset commander in order to effectively command one or more unmanned assets. As such, unmanned-manned teamwork can be more seamlessly provided, since the pilot or driver of a manned asset can command their unmanned teammates whilst still having the capacity to operate their own vehicle.

## Claims

1. A system (1) for controlling operation of one or more unmanned assets (15), the system (1) comprising:
a graphical user interface (3) displaying a map, wherein the graphical user interface (3) is configured to accept one or more graphical inputs which are drawn on the map by an unmanned asset commander;
a calculation unit (5) comprising:
an input interpretation module (7) configured to:
recognise the graphical inputs; and
translate the graphical inputs into tasks and/or commands;
an operation planning module (9) configured to:
generate operation instructions for one or more of the unmanned assets (15) based at least on the tasks and/or commands; and
a journey planning module (11) configured to:
generate a journey plan for one or more of the unmanned assets (15) based at least on the operation instructions; and
a communications module (13) configured to communicate with the one or more unmanned assets (15) to instruct the unmanned assets (15) to operate according to the generated journey plan, **characterised in that**:
the input interpretation module (7) is configured to translate the graphical inputs by comparing the graphical inputs to a library of known input symbols and their corresponding commands.

2. The system (1) of claim 1, wherein the operation planning module (9) is further configured to:
obtain data indicative of external and/or environmental constraints; and
generate operation instructions based on the data indicative of external and/or environmental constraints.

3. The system (1) of claim 2, wherein the data indicative of external and/or environmental constraints comprises data indicative of one or more of: terrain information, weather, obstacles, air traffic, restricted and hazardous areas, published navigation information.

4. The system (1) of any preceding claim, wherein the graphical user interface (3) is configured to accept hand-drawn inputs.

5. The system (1) of any preceding claim, wherein the system (1) is for controlling operation of one or more unmanned assets (15) including one or more unmanned aerial vehicles.

6. The system (1) of any preceding claim, wherein the system (!) is for controlling operation of a plurality of unmanned assets (15) comprising a plurality of different unmanned asset types.

7. The system (1) of any preceding claim, wherein the input interpretation module (7) is configured to recognise the graphical inputs by:
identifying the shapes of the graphical inputs; and
identifying geographical locations corresponding to the portions of the map on which the graphical inputs were drawn.

8. The system (1) of any preceding claim, wherein the input interpretation module (7) comprises a local memory, wherein the library of known input symbols and corresponding commands is stored in the local memory, or wherein the library of known input symbols and corresponding commands is stored in a remote memory, and the input interpretation module is configured to:
obtain the library of known input symbols and corresponding commands from the remote memory.

9. The system (1) of any preceding claim, wherein the operation planning module (9) is configured to:
receive position and/or status data from the one or more unmanned assets (15).

10. The system (1) of any preceding claim, wherein the operation planning module (9) is configured to:
allocate tasks associated with graphical inputs to different ones of a plurality of unmanned assets (15).

11. The system (1) of claim 10, wherein the operation planning module (9) is configured to:
receive position and/or status data from the one or more unmanned assets (15); and
wherein the allocation of tasks is based at least partially on the position and/or status data.

12. The system (1) of any preceding claim, wherein the graphical inputs correspond to commands including one or more of: take off from this location, land in this location, ditch in this location in case of emergency, rendezvous at this location at this time, deliver payload to this location, pick up payload from this location, inspect this portion of highway/border/railway/powerline, patrol this portion of highway/border/railway/powerline from this location, inspect this portion of highway/border/railway/powerline, patrol/scan this area, avoid flying over this area, loiter in this location, monitor this point of interest in orbit, monitor this point of interest in a figure of eight, search this area for targets, search along this border for targets, gather at this location, split from this location.

13. A system comprising:
one or more unmanned assets (15); and
a system (1) for controlling one or more unmanned assets (15) according to any preceding claim.

14. A method (20) for controlling operation of one or more unmanned assets (15), the method comprising:
displaying a map on a graphical user interface (21);
accepting, via the graphical user interface, one or more graphical inputs which are drawn on the map by an unmanned asset commander (23);
recognising the graphical inputs;
translating the inputs into tasks and/or commands (25);
generating operation instructions for one or more of the unmanned assets based at least on the tasks and/or commands (31);
generating a journey plan for one or more of the unmanned assets based at least on the operation instructions (33); and
communicating with the one or more unmanned assets to instruct the unmanned assets to operate according to the generated journey plan(s) (35), **characterised by**:
translating the graphical inputs by comparing the graphical inputs to a library of known input symbols and their corresponding commands.

## Patentansprüche

1. System (1) zum Steuern des Betriebs eines oder mehrerer unbemannter Fahrzeuge (15), wobei das System (1) Folgendes umfasst:
eine grafische Benutzeroberfläche (3), die eine Karte anzeigt, wobei die grafische Benutzeroberfläche (3) dazu konfiguriert ist, eine oder mehrere grafische Eingaben zu akzeptieren, die von einem Befehlshaber eines unbemannten Fahrzeugs auf die Karte gezeichnet werden;
eine Recheneinheit (5), die Folgendes umfasst:
ein Eingabeinterpretationsmodul (7), das zu Folgendem konfiguriert ist:
Erkennen der grafischen Eingaben; und
Übersetzen der grafischen Eingaben in Aufgaben und/oder Befehle;
ein Betriebsplanungsmodul (9), das zu Folgendem konfiguriert ist:
Erzeugen von Betriebsanweisungen für eines oder mehrere der unbemannten Fahrzeuge (15) mindestens auf der Grundlage der Aufgaben und/oder Befehle; und
ein Streckenplanungsmodul (11), das zu Folgendem konfiguriert ist:
Erzeugen eines Streckenplans für eines oder mehrere der unbemannten Fahrzeuge (15) mindestens auf der Grundlage der Betriebsanweisungen; und
ein Kommunikationsmodul (13), das dazu konfiguriert ist, mit dem einen oder den mehreren unbemannten Fahrzeugen (15) zu kommunizieren, um die unbemannten Fahrzeuge (15) anzuweisen, gemäß dem erzeugten Streckenplan zu arbeiten, **dadurch gekennzeichnet, dass**:
das Eingabeinterpretationsmodul (7) dazu konfiguriert ist, die grafischen Eingaben durch Vergleichen der grafischen Eingaben mit einer Bibliothek bekannter Eingabesymbole und ihrer entsprechenden Befehle zu übersetzen.

2. System (1) nach Anspruch 1, wobei das Betriebsplanungsmodul (9) ferner zu Folgendem konfiguriert ist:
Erlangen von Daten, die äußere und/oder umgebungsbedingte Einschränkungen angeben, und
Erzeugen von Betriebsanweisungen auf der Grundlage der Daten, die äußere und/oder umgebungsbedingte Einschränkungen angeben.

3. System (1) nach Anspruch 2, wobei die Daten, die äußere und/oder umgebungsbedingte Einschränkungen angeben, Daten umfassen, die eines oder mehrere der Folgenden angeben: Geländeinformationen, Wetter, Hindernisse, Luftverkehr, Sperr- und Gefahrengebiete, veröffentlichte Navigationsinformationen.

4. System (1) nach einem der vorhergehenden Ansprüche, wobei die grafische Benutzeroberfläche (3) dazu konfiguriert ist, handgezeichnete Eingaben zu akzeptieren.

5. System (1) nach einem der vorhergehenden Ansprüche, wobei das System (1) zum Steuern des Betriebs eines oder mehrerer unbemannter Fahrzeuge (15) einschließlich eines oder mehrerer unbemannter Luftfahrzeuge dient.

6. System (1) nach einem der vorhergehenden Ansprüche, wobei das System (!) zum Steuern des Betriebs einer Vielzahl von unbemannten Fahrzeugen (15) dient, die eine Vielzahl von unterschiedlichen Typen unbemannter Fahrzeuge umfasst.

7. System (1) nach einem der vorhergehenden Ansprüche, wobei das Eingabeinterpretationsmodul (7) dazu konfiguriert ist, die grafischen Eingaben zu erkennen, durch:
Identifizieren der Formen der grafischen Eingaben; und
Identifizieren der geografischen Orte, die den Abschnitten der Karte entsprechen, auf denen die grafischen Eingaben gezeichnet wurden.

8. System (1) nach einem der vorhergehenden Ansprüche, wobei das Eingabeinterpretationsmodul (7) einen lokalen Speicher umfasst, wobei die Bibliothek bekannter Eingabesymbole und entsprechender Befehle im lokalen Speicher gespeichert ist, oder wobei die Bibliothek bekannter Eingabesymbole und entsprechender Befehle in einem entfernten Speicher gespeichert ist, und das Eingabeinterpretationsmodul zu Folgendem konfiguriert ist:
Erlangen der Bibliothek bekannter Eingabesymbole und entsprechender Befehle aus dem entfernten Speicher.

9. System (1) nach einem der vorhergehenden Ansprüche, wobei das Betriebsplanungsmodul (9) zu Folgendem konfiguriert ist:
Empfangen von Positions- und/oder Statusdaten von dem einen oder den mehreren unbemannten Fahrzeugen (15).

10. System (1) nach einem der vorhergehenden Ansprüche, wobei das Betriebsplanungsmodul (9) zu Folgendem konfiguriert ist:
Zuweisen von Aufgaben, die mit grafischen Eingaben verbunden sind, an verschiedene einer Vielzahl von unbemannten Fahrzeugen (15) .

11. System (1) nach Anspruch 10, wobei das Betriebsplanungsmodul (9) zu Folgendem konfiguriert ist:
Empfangen von Positions- und/oder Statusdaten von dem einen oder
den mehreren unbemannten Fahrzeugen (15); und
wobei die Zuweisung von Aufgaben mindestens teilweise auf der Grundlage der Positions- und/oder Statusdaten erfolgt.

12. System (1) nach einem der vorhergehenden Ansprüche, wobei die grafischen Eingaben Befehlen entsprechen, die eines oder mehrere der Folgenden beinhalten: Starten von diesem Ort, Landen an diesem Ort, Notwassern an diesem Ort, Treffen an diesem Ort zu dieser Zeit, Abliefern von Nutzlast an diesem Ort, Abholen von Nutzlast von diesem Ort, Inspizieren dieses Abschnitts einer Autobahn/Grenze/Eisenbahnlinie/Stromleitung, Patrouillieren dieses Abschnitts einer Autobahn/Grenze/Eisenbahnlinie/Stromleitung von diesem Ort, Inspizieren dieses Abschnitts einer Autobahn/Grenze/Eisenbahnlinie/Stromleitung, Patrouillieren/Überprüfen dieses Gebiets, Vermeiden des Überfliegens dieses Gebiets, Verbleiben an diesem Ort, Überwachen dieses Punkts von Interesse in einer Umlaufbahn, Überwachen dieses Punkts von Interesse in einer Acht, Durchsuchen dieses Gebiets nach Zielen, Suchen entlang dieser Grenze nach Zielen, Versammeln an diesem Ort, Aufteilen von diesem Ort.

13. System, umfassend:
ein oder mehrere unbemannte Fahrzeuge (15); und
ein System (1) zum Steuern eines oder mehrerer unbemannter Fahrzeuge (15) nach einem der vorhergehenden Ansprüche.

14. Verfahren (20) zum Steuern des Betriebs eines oder mehrerer unbemannter Fahrzeuge (15), wobei das Verfahren Folgendes umfasst:
Anzeigen einer Karte auf einer grafischen Benutzeroberfläche (21);
Akzeptieren einer oder mehrerer grafischer Eingaben, die von einem Befehlshaber eines unbemannten Fahrzeugs auf die Karte gezeichnet werden, über die grafische Benutzeroberfläche (23);
Erkennen der grafischen Eingaben;
Übersetzen der Eingaben in Aufgaben und/oder Befehle (25);
Erzeugen von Betriebsanweisungen für eines oder mehrere der unbemannten Fahrzeuge mindestens auf der Grundlage der Aufgaben und/oder Befehle (31);
Erzeugen eines Streckenplans für eines oder mehrere der unbemannten Fahrzeuge mindestens auf der Grundlage der Betriebsanweisungen (33); und
Kommunizieren mit dem einen oder den mehreren unbemannten Fahrzeugen, um die unbemannten Fahrzeuge anzuweisen, gemäß dem erzeugten Streckenplan bzw. den erzeugten Streckenplänen zu arbeiten (35), **gekennzeichnet durch**:
Übersetzen der grafischen Eingaben durch Vergleichen der grafischen Eingaben mit einer Bibliothek bekannter Eingabesymbole und ihrer entsprechenden Befehle.

## Revendications

1. Système (1) de commande du fonctionnement d'un ou plusieurs actifs sans pilote (15), le système (1) comprenant :
une interface utilisateur graphique (3) affichant une carte, dans lequel l'interface utilisateur graphique (3) est configurée pour accepter une ou plusieurs entrées graphiques qui sont dessinées sur la carte par un commandant d'actif sans pilote ;
une unité de calcul (5) comprenant :
un module d'interprétation d'entrée (7) configuré pour :
reconnaître les entrées graphiques ; et
traduire les entrées graphiques en tâches et/ou ordres ;
un module de planification de fonctionnement (9) configuré pour :
générer des instructions de fonctionnement pour un ou plusieurs des actifs sans pilote (15) sur la base au moins des tâches et/ou des ordres ; et
un module de planification de voyage (11) configuré pour :
générer un plan de voyage pour un ou plusieurs des actifs sans pilote (15) sur la base au moins des instructions de fonctionnement ; et
un module de communication (13) configuré pour communiquer avec les un ou plusieurs actifs sans pilote (15) afin d'ordonner aux actifs sans pilote (15) de fonctionner selon le plan de voyage généré, **caractérisé en ce que** :
le module d'interprétation d'entrée (7) est configuré pour traduire les entrées graphiques en comparant les entrées graphiques à une bibliothèque de symboles d'entrée connus et à leurs ordres correspondants.

2. Système (1) selon la revendication 1, dans lequel le module de planification de fonctionnement (9) est également configuré pour :
obtenir des données indiquant des contraintes externes et/ou environnementales ; et
générer des instructions de fonctionnement sur la base des données indiquant des contraintes externes et/ou environnementales.

3. Système (1) selon la revendication 2, dans lequel les données indiquant des contraintes externes et/ou environnementales comprennent des données indiquant un ou plusieurs de : informations de terrain, météo, obstacles, trafic aérien, zones restreintes et dangereuses, informations de navigation publiées.

4. Système (1) selon une quelconque revendication précédente, dans lequel l'interface utilisateur graphique (3) est configurée pour accepter des entrées dessinées à la main.

5. Système (1) selon une quelconque revendication précédente, dans lequel le système (1) est destiné à commander le fonctionnement d'un ou plusieurs actifs sans pilote (15) comportant un ou plusieurs véhicules aériens sans pilote.

6. Système (1) selon une quelconque revendication précédente, dans lequel le système (!) est destiné à commander le fonctionnement d'une pluralité d'actifs sans pilote (15) comprenant une pluralité de types d'actifs sans pilote différents.

7. Système (1) selon une quelconque revendication précédente, dans lequel le module d'interprétation d'entrée (7) est configuré pour reconnaître les entrées graphiques par :
identification des formes des entrées graphiques ; et
identification d'emplacements géographiques correspondant aux parties de la carte sur lesquelles les entrées graphiques ont été dessinées.

8. Système (1) selon une quelconque revendication précédente, dans lequel le module d'interprétation d'entrée (7) comprend une mémoire locale, dans lequel la bibliothèque de symboles d'entrée connus et d'ordres correspondants est stockée dans la mémoire locale, ou dans lequel la bibliothèque de symboles d'entrée connus et d'ordres correspondants est stockée dans une mémoire distante, et le module d'interprétation d'entrée est configuré pour :
obtenir la bibliothèque de symboles d'entrée connus et les ordres correspondants à partir de la mémoire distante.

9. Système (1) selon une quelconque revendication précédente, dans lequel le module de planification de fonctionnement (9) est configuré pour :
recevoir des données de position et/ou d'état provenant des un ou plusieurs actifs sans pilote (15).

10. Système (1) selon une quelconque revendication précédente, dans lequel le module de planification de fonctionnement (9) est configuré pour :
attribuer des tâches associées à des entrées graphiques à différents actifs d'une pluralité d'actifs sans pilote (15).

11. Système (1) selon la revendication 10, dans lequel le module de planification de fonctionnement (9) est configuré pour :
recevoir des données de position et/ou d'état provenant des un ou plusieurs actifs sans pilote (15) ; et
dans lequel l'attribution des tâches est basée au moins en partie sur les données de position et/ou d'état.

12. Système (1) selon une quelconque revendication précédente, dans lequel les entrées graphiques correspondent à des ordres comportant une ou plusieurs de : décoller de cet emplacement, atterrir à cet emplacement, amerrir à cet emplacement en cas d'urgence, rendez-vous à cet emplacement à ce moment, livrer une charge utile à cet emplacement, récupérer une charge utile à cet emplacement, inspecter cette partie d'autoroute/frontière/voie ferrée/ligne électrique, patrouiller cette partie d'autoroute/frontière/voie ferrée/ligne électrique à partir de cet emplacement, inspecter cette partie d'autoroute/frontière/voie ferrée/ligne électrique, patrouiller/balayer cette zone, éviter de survoler cette zone, attendre au-dessus de cet emplacement, surveiller ce point d'intérêt en orbite, surveiller ce point d'intérêt en formant un huit, rechercher des cibles dans cette zone, rechercher des cibles le long de cette frontière, se rassembler à cet emplacement, se séparer de cet emplacement.

13. Système comprenant :
un ou plusieurs actifs sans pilote (15) ; et
un système (1) de commande d'un ou plusieurs actifs sans pilote (15) selon une quelconque revendication précédente.

14. Procédé (20) de commande du fonctionnement d'un ou plusieurs actifs sans pilote (15), le procédé comprenant :
l'affichage d'une carte sur une interface utilisateur graphique (21) ;
l'acceptation, par l'intermédiaire de l'interface utilisateur graphique, d'une ou plusieurs entrées graphiques qui sont dessinées sur la carte par un commandant d'actifs sans pilote (23) ;
la reconnaissance des entrées graphiques ;
la traduction des entrées en tâches et/ou ordres (25) ;
la génération d'instructions de fonctionnement pour un ou plusieurs des actifs sans pilote sur la base au moins des tâches et/ou des ordres (31) ;
la génération d'un plan de voyage pour un ou plusieurs des actifs sans pilote sur la base au moins des instructions de fonctionnement (33) ; et
la communication avec un ou plusieurs actifs sans pilote pour ordonner aux actifs sans pilote de fonctionner selon le(s) plan(s) de voyage généré(s) (35), **caractérisé par** :
la traduction des entrées graphiques par comparaison des entrées graphiques à une bibliothèque de symboles d'entrée connus et à leurs ordres correspondants.
